# EUROPEAN PATENT APPLICATION

(11) **EP 4 507 015 A1**
(43) Date of publication of application: **12.02.2025**
(21) Application number: 23190445.9
(22) Date of filing: 09.08.2023
(51) Int. Cl.: H01M 4/04, H01M 4/38, H01M 4/46, H01M 10/05, H01M 10/054, H01M 10/0566

(54) **SECONDARY BATTERY**

(71) Applicant: SBK Solution Co., Ltd., Tokyo (JP); Takahashi, Koh, Tsukuba-shi Ibaraki (JP)
(72) Inventor: TAKAHASHI, Koh, Tsukuba-shi, Ibaraki (JP)
(74) Representative: Lambacher, Michael

(57) **Abstract**

[Problem to be solved]

Providing a configuration of a secondary battery that is low in manufacturing cost and simple in manufacturing process because of not using rare metals.

[Means for solving]

A secondary battery that is characterized to adapt copper as active material forming a positive electrode 1, adopt aluminum as active material forming a negative electrode 2, adopting a non-aqueous electrolytic solution as an electrolyte, wherein copper ions (Cu²⁺) migrate from the positive electrode to the negative electrode during charging, and copper ions (Cu²⁺) migrate along opposite objection during discharging, and above problem can be solved.

## Description

### [Technical Field]

The present invention relates to a secondary battery that equips a non-aqueous electrolyte and a separator between a positive electrode and a negative electrode forming a small size and high capacity as much as a lithium ion battery, and that is possible to repeat charging and discharging.

### [Background Art]

Lithium-ion secondary battery with a small size and high-capacity are used as power sources for portable electronic devices such as laptop computers and smartphones.

And recently, it is also used as a secondary battery in storage for reproducing energy and in electric automobiles with view point of for problem of earth environment and avoiding carbonization.

Lithium compound, such as lithium cobalt oxide (LiCoO₂), ternary system (Li(Ni,Co,Mn)O₂), lithium manganate (LiMn₂O₄), lithium iron phosphate (LiFePO₄), etc. are used as positive electrode active materials in lithium ion secondary battery, and carbon materials such as hard carbon and graphite, silicon oxide (SiO), and silicon (Si), etc. are used as negative electrode active materials.

However, since lithium, cobalt, and nickel are rare metals, their production costs are high, and mining volumes are scarce, and lacking state of raw material is unavoidable compared to iron, aluminum, etc.

Furthermore, it is necessary that the positive electrode active material and the negative electrode active material are applied to the positive electrode current collector and the negative electrode current collector, respectively, that is, the terminals transmitting the current generated by the positive electrode active material and the negative electrode active material to the outside of the battery. However, such a manufacturing process of the application is never simple and is complicated.

For reference, in a typical lithium ion battery, lithium cobaltate powder corresponding to a positive electrode active material is applied to an aluminum foil corresponding to a positive electrode current collector, and graphite powder corresponding to a negative electrode active material is applied to a copper foil corresponding to a negative electrode current collector.

However, these applying operations are quite complicated.

In Patent Document 1, copper is adopted as the positive electrode, aluminum is adopted as the negative electrode, and an electrolyte is interposed between both of electrodes (claim 1 and abstract), and a predetermined electromotive force is generated for each type of electrolyte.

The data generated are disclosed (Table 1 at paragraph [0032], Table 2 at paragraph [0038], Table 3 at paragraph [0040]).

That is, Patent Document 1 discloses a battery that can be discharged when copper is used as the positive electrode, aluminum is used as the negative electrode, and a predetermined electrolytic solution is interposed between them.

However, the battery of Patent Document 1 is a so-called aluminum-air battery, and works as a primary battery, based on that aluminum dissolves as aluminum ions from the cathode, emits electrons, and receives electrons on the positive electrode by reacting with hydroxide ions and forming aluminum hydroxide (Al(OH)3 ).

However, in Patent Document 1, an electrolytic solution containing an aqueous solution is adopted (claim 1).

In the case of such an electric solution, Oxygen is generated from the positive electrode and hydrogen is generated from the negative electrode by electrolysis, and stable charging is impossible, so the electric solution cannot work for function of the secondary battery which may be utilized in industry, because aluminum hydroxide corresponding to a discharge product cannot be formed by reduction.

As described above, in the prior art, the configuration of a secondary battery having a low manufacturing cost, a simple manufacturing process, and substituting to lithium ion battery has not been presented.

### [Prior Art Documents]

### [Patent Document]

Patent Document 1 JP-2008-4517 A1

### [Summary of the Invention]

### [Problem to be solved by the Invention]

The problem of the present invention is to provide a configuration of a secondary battery that is low in manufacturing cost and simple in manufacturing process because of not using rare metals.

### [Means for solving the Problem]

For the purpose of solving the above problem, the basic configuration thought by the inventor is
(1) a secondary battery that is characterized to adapt copper as active material forming a positive electrode, adopt aluminum as active material forming a negative electrode, adopting a non-aqueous electrolytic solution as an electrolyte, wherein copper ions (Cu²⁺) migrate from the positive electrode to the negative electrode during charging, and copper ions (Cu²⁺) migrate along opposite objection during discharging,
(2) The secondary battery according to (1), wherein copper acts as a positive electrode active material and a positive electrode current collector, and aluminum acts as a negative electrode active material and a negative electrode current collector.

Basic configuration (1) includes basic configuration (2) of copper and aluminum acting respectively as a positive electrode current collector and a negative electrode current collector, and include not only such a configuration, but also an example of configuration in that a silver foil or an aluminum foil is used as the current collector, and a silver foil or a copper foil is used as the negative electrode current collector.

However, such a configuration is exceptional, and almost of configuration (1) are based on the basic configuration (2).

In addition, the "non-aqueous electrolyte" in the basic configuration (1) means an electrolyte that does not contain water and allows cations (copper ions in the case of the basic configurations (1) and (2)) to be conductive during charging and discharging.

### [Effect of the Invention]

As is clear from the basic configurations (1) and (2), the present invention is composed of three elements, copper, aluminum, and a separator forming an integral state with a non-aqueous electrolyte, and manufacturing cost is low because of not using rare metals are used as is the case of lithium battery.

Moreover, in the case of the basic configuration (2), manufacturing process is extremely simple, since all materials of the positive electrode are copper and all materials of the negative electrode are aluminum.

The action of the basic configuration with such an effect is as follows.

In basic configurations (1) and (2), charging is carried out by copper acting as a positive electrode active material and aluminum acting as a negative electrode active material.

In the charging stage, at the positive electrode, ionization reaction according to

Cu->Cu²⁺+2e⁻

is carried out, wherein copper ions (Cu²⁺) move from the positive electrode to the negative electrode side through the non-aqueous electrolyte, and electrons (e⁻) move to the positive electrode side through the conductive line of the output side.

On the other hand, at the negative electrode, reaction according to

Cu²⁺+2Al+2e⁻→ CuAl₂

is carried out, wherein copper and aluminum form a solid solution to form a crystal structure, thereby forming an alloy and emitting electrons (e⁻).

Additionally, the reason of forming alloy by combining simple substance of two Al atoms with simple substance of one copper ion (Cu²⁺) comes from that the most stable crystal structure is achieved in the case of the above ratio.

Consequently, in the case of discharging, at the positive electrode, binding reaction between copper ions and electrons takes place,
ionization reaction between copper and electrons according to

Cu²⁺+2e⁻→Cu

is carried out and at the negative electrode,

CuAl₂→Cu²⁺+2Al+2e⁻

is carried out, and discharging is achieved.

So, alloying copper and aluminum and separating both of metals according to the overall reaction by charging and discharging,

Cu+2Al⇔ CuAl₂

is carried out.

In basic configurations (1) and (2), copper acts as a positive electrode active material and aluminum acts as a negative electrode active material, in the case that aluminum is used as the terminal of the negative electrode current collector, the positive electrode and the negative electrode are made of copper and aluminum, respectively as is basic configuration (2), and a very simple manufacturing process is achieved.

The theoretical capacity of copper, corresponding to the positive electrode active material, is about 850 mAh/g, but as described later on Examples, when the operating voltage in discharge is 2.8 V, the weight energy density is 850 × 2.8 = 2,380 Wh/kg and a density of 8.91, the volumetric energy density is about 21,200 Wh/L.

When comparing the above density values with the positive electrode material Li(Ni,Co,Mn)O₂ of existing lithium-ion secondary battery, the weight energy density is about 3 times higher numerical value, and the volume energy density is about 6 times higher numerical value.

### [Brief description of the Drawings]

- FIG.1: A schematic diagram showing the configuration of the secondary battery of the present invention.
- FIG.2: A schematic diagram showing the configuration of a typical lithium-ion battery.
- FIG.3: A graph showing the relationship between time and voltage indicating the state of charge and the state of discharge in the example of the present invention.

### [Embodiments for carrying out the Invention]

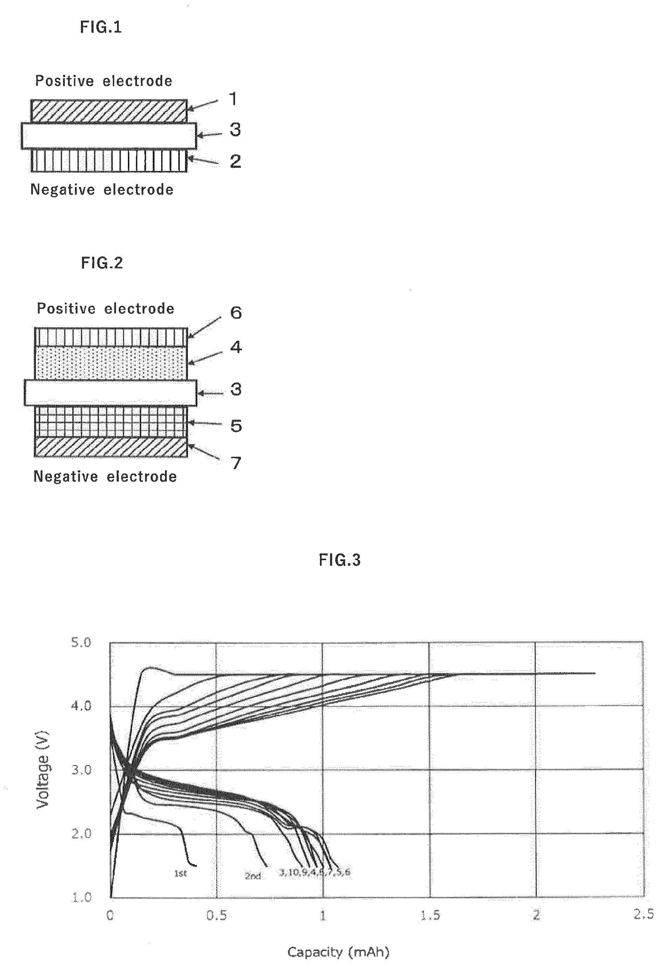

As shown in FIG. 1, the basic configuration (1) is a secondary battery that is characterized to adapt copper as active material forming a positive electrode **1,** adopt aluminum as active material forming a negative electrode **2,** adopting a non-aqueous electrolytic solution as an electrolyte, wherein copper ions (Cu²⁺) migrate from the positive electrode **1** to the negative electrode **2** during charging, and copper ions (Cu²⁺) migrate along opposite objection during discharging.

Configuration (2) is the secondary battery according to (1), wherein copper acts as a positive electrode active material **4** and a positive electrode current collector **6,** and aluminum acts as a negative electrode active material **5** and a negative electrode current collector **7.**

In most cases, the basic configuration (1) is composed by the basic configuration (2), but exceptionally, almost of metal foil other than copper is used as the positive electrode current collector, and a metal foil other than aluminum is used as the negative electrode current collector as is pointed out in the section on the means for solving the problem.

Comparing with the configuration of a typical lithium ion battery shown in FIG. 2, the basic configuration (1) is different in that in positive electrode **1,** copper is used as the positive electrode active material **4** instead of the oxide material including lithium, and aluminum is used instead of graphite or the like as the negative electrode active material **5.**

The basic configuration (2) is different in that the positive electrode active material made of copper also serves as the positive electrode current collector instead of the current collector **6** formed by aluminum foil applied with oxide material **4** as the case of a lithium ion battery, and the negative electrode active material made of aluminum also serves as the negative electrode current collector **7** instead of the current collector **7** formed by copper foil applied with lithium carbide or the carbon material.

According to such structural differences, in the case of the basic configuration (1), the manufacturing cost is lower than that of the lithium ion secondary battery, and in the case of the basic configuration (2), manufacturing process is simpler than that of the lithium ion secondary battery, as is already pointed out.

In the basic configurations (1) and (2), the separator 3 integrally formed with the non-aqueous electrolyte is provided between the positive electrode **1** and the negative electrode **2** as in the case of the lithium ion secondary battery.

However, it is necessary that the separator **3** of the basic configurations (1) and (2) is a porous state allowing permeation of copper ions (Cu²⁺).

Typical examples of non-aqueous electrolytes are ionic liquids and organic electrolytes, in both of them copper ions (Cu²⁺) and electrons (e⁻) can flow during charging and discharging.

An ionic liquid is usually defined as a liquid in which cations and anions can exist at 100° C or lower.

According to fundamental configuration of cation depending on the type of cation, imidazolium salts, pyrrolidinium salts, pyridinium salts, piperidinium salts, ammonium salts, and phosphonium salts may be listed, and any of these cations can be used.

Regarding anions coexisting with cations, halogen-based system such as bromide ions and triflate, boron-based ones such as tetraphenylborate, and phosphorus-based ones such as hexafluorophosphate may be listed.

Since ionic liquids are non-flammable and non-volatile, safe secondary battery can be produced in the case of using ionic liquids as non-aqueous electrolytes.

An organic electrolyte is defined as an electrolyte in which both cations and anions are dissolved in an organic solvent.

Acetonitrile, dioxolane, 1,2-dimethoxyethane, tetrahydrofuran, *γ* -butyrolactone, propylene carbonate, and ethylene carbonate etc. may be listed as the organic solvent.

Alkyl ammonium, cations and anions such as halogen ions, sulfate ions, perchlorate ions etc. may be listed as the electrolyte salts.

However, organic electrolytes tend to be inferior to ionic liquids on non-flammability and non-volatility.

In the basic configurations (1) and (2), a separator **3** containing a non-aqueous electrolytic solution is used between the positive electrode **1** and the negative electrode **2.**

Separators **3** are also used in ordinary lithium ion secondary battery to prevent short circuits between the positive and negative electrodes.

Hereinafter, it will be explained in accordance with an Example.

### [Example]

In the examples, a rectangular copper plate of 30 mm × 40 mm × 20 µm thickness was adopted as the positive electrode **1,** a rectangular aluminum plate of 30 mm × 40 mm × 20 µm thickness was adopted as the negative electrode **2,** and an imidazolium salt-based ionic liquid was adopted as the electrolyte, and a 35 mm × 35 mm × 200 *µ*m thickness glass filter paper was adopted as the separator.

After the area of the positive electrode **1** and the negative electrode **2** facing each other is set to 30 mm × 30 mm, and the separator **3** is sandwiched between the positive electrode **1** and the negative electrode **2,** outer side of sandwiched state is fixed by two glass plates of 76 mm × 55 mm × 1.2 mm, and a secondary battery in the form of a simple evaluation cell was produced.

A charge-discharge cycle test was performed by repeating charging under conditions of a current of 10 mA and a final voltage of 4.5 V and discharging under conditions of a current of 2 mA and a final voltage of 1.5 V under an environmental temperature of 25° C.

The state of the charge-discharge cycle test is shown by charge-discharge curves in FIG.3.

In the discharge curve, a voltage value due to a plateau near 2.8 V, in other words, a voltage value in a relatively stable state can be observed.

According to such observation, it can be confirmed that the battery by the example is not a mere discharge capacitor but a secondary battery.

For reference, in the case of a capacitor, the voltage value due to discharge decays exponentially, and the voltage value due to the plateau as described above cannot be achieved.

Furthermore, as is clear from the charge/discharge curve shown in FIG. 3, it can be confirmed that the secondary battery in the simple cell state can be charged/discharged up to at least 10 cycles.

As described above, the charge-discharge process shown in FIG. 3 enables repeated charge-discharge reactions in the case of the secondary battery according to the present invention. Moreover, it is confirmed that a secondary battery can be achieved by a simple manufacturing process.

### [Industrial Applicability]

As is clear from the above examples, the secondary battery according to the present invention, with a low manufacturing cost and a simple structure, it is possible to charge and discharge with a current value and a voltage value with identical level to those of a lithium ion battery.

As a result, the secondary battery by the present invention can be used in a wide range of industrial fields, such as power sources for various portable devices, power sources for electric vehicles, and power storage equipment for power standardization of renewable energy.

### [Explanation for Signs]

**1** Positive electrode
**2** Negative electrode
**3** Separator
**4** Positive electrode active material
**5** Negative electrode active material
**6** Positive electrode current collector
**7** Negative electrode current collector

## Claims

1. A secondary battery that is characterized to adapt copper as active material forming a positive electrode, adopt aluminum as active material forming a negative electrode, adopting a non-aqueous electrolytic solution as an electrolyte, wherein copper ions (Cu²⁺) migrate from the positive electrode to the negative electrode during charging, and copper ions (Cu²⁺) migrate along opposite objection during discharging.

2. The secondary battery according to claim 1, wherein copper acts as a positive electrode active material and a positive electrode current collector, and aluminum acts as a negative electrode active material and a negative electrode current collector.

3. The secondary battery according to any one of claims 1 and 2, wherein a stable voltage by a plateau can be carried out around 2.8V in the stage of discharging by charging with a current of 10 mA and a final voltage of 4.5 V and discharging with a current of 2 mA and a final voltage of 1.5 V are repeated with adopting an area of 30 mm × 40 mm as the positive electrode and the negative electrode.

4. The secondary battery according to any one of claims 1 and 2, wherein alloying of copper and aluminum is carried out during charging and separation of copper and aluminum is carried out during discharging, by the reaction formula Cu+2Al ⇔ CuAl₂ in the negative electrode.

5. The secondary battery according to any one of claims 1 and 2, wherein the non-aqueous electrolyte is an ionic liquid or an organic electrolyte.

## Amended claims

### Amended claims in accordance with Rule 137(2) EPC.

1. A secondary battery that is characterized to comprise copper metal working as a positive electrode active material (4) forming a positive electrode (1), to comprise aluminum metal working as a negative electrode active material (5) forming a negative electrode (2), and to comprise a non-aqueous electrolytic solution working as an electrolyte, wherein copper ions (Cu²⁺) migrate from the positive electrode (1) to the negative electrode (2) during charging, and copper ions (Cu²⁺) migrate along opposite direction during discharging.

2. The secondary battery according to claim 1, wherein copper acts as the positive electrode active material (4) and a positive electrode current collector (6), and aluminum acts as a negative electrode active material (5) and a negative electrode current collector (7).

3. The secondary battery according to any one of claims 1 and 2, wherein the second battery is configured to have a stable voltage plateau near a voltage of 2.8 V in the discharge curve when the secondary battery is subjected to a charge-discharge cycle test comprising a repeated charging under conditions of a current of 10 mA and a final voltage of 4.5 V and discharging under conditions of a current of 2 mA and a final voltage of 1.5 V.

4. The secondary battery according to any one of claims 1 and 2, wherein alloying of copper and aluminum is carried out during charging and separation of copper and aluminum is carried out during discharging, by the reaction formula Cu+2AI <=> CuAlz in the negative electrode (2).

5. The secondary battery according to any one of claims 1 and 2, wherein the non-aqueous electrolyte is an ionic liquid or an organic electrolyte.

6. The secondary battery according to any one of claims 1 to 5, wherein the electrolyte is an imidazolium salt-based ionic liquid, the positive electrode (1) and the negative electrode (2) each have dimensions of 30 mm x 40 mm x 200 µm with an area facing each other to be 30 mm x 30 mm, and wherein a separator between the positive electrode (1) and the negative electrode (2) comprises a glass filter paper.
